# EUROPÄISCHE PATENTSCHRIFT

(11) **EP 0 504 488 B1**
(45) Veröffentlichungstag und Bekanntmachung des Hinweises auf die Patenterteilung: **23.04.1997**
(21) Anmeldenummer: 91121759.4
(22) Anmeldetag: 19.12.1991
(51) Int. Cl.: B21D 7/06

(54) **Vorrichtung zum Biegen von Rohren**
Pipe bending device
Dispositif de pliage de tubes

(30) Priorität: 19.03.1991 DE 9103368 U
(43) Veröffentlichungstag der Anmeldung: 23.09.1992
(73) Patentinhaber: Hewing GmbH, D-48607 Ochtrup (DE)
(72) Erfinder: Hansen, Jörg, W-4441 Wettringen (DE)
(74) Vertreter: Hilleringmann, Jochen, Dipl.-Ing.

(56) Entgegenhaltungen:
- CH-A- 337 060
- GB-A- 2 146 275
- US-A- 2 127 185
- US-A- 3 126 773
- US-A- 3 433 042

## Beschreibung

Die Erfindung betrifft eine Vorrichtung zum Biegen von Rohren, insbesondere Kunststoff- oder Verbundrohren, gemäß dem Oberbegriff des Anspruchs 1.

Außer einer stationären Vorrichtung der eingangs genannten Art (CH-A-337 060) ist auch eine als Handgerät ausgebildete Biegevorrichtung bekannt (US-A-2 127 185), bei der eine Grundplatte mit einem verstellbaren Handhebel versehen und eine Spannvorrichtung mit Klemmbacken vorgesehen ist, von denen eine obere, schwenkbewegliche Klemmbacke mittels einer Druckschraube an eine ortsfeste untere Klemmbacke anlegbar ist. Zur Einleitung einer Biegekraft in das Rohr ist ein mittels eines Schwenkhebels verschwenkbarer Biegekopf mit einer Druckfläche vorgesehen, die im Querschnitt bogenförmig und im Längsschnitt geradlinig ausgeführt ist.

Ausgehend von einer stationären Vorrichtung der eingangs genannten Art liegt der Erfindung die Aufgabe zugrunde, eine Vorrichtung zum Biegen von Rohren zu schaffen, die als einfach handhabbares Biegewerkzeug universell für Kunststoff- oder Verbundrohre einsetzbar und mit geringem Aufwand an unterschiedliche Anforderungen anpaßbar ist.

Die Erfindung löst diese Aufgabe durch eine Vorrichtung zum Biegen von Rohren, insbesondere Kunststoff- oder Verbundrohren, gemäß dem Anspruch 1. Hinsichtlich wesentlicher weiterer Ausgestaltungen wird auf die Ansprüche 2 bis 4 verwiesen.

Die Vorrichtung nach der Erfindung ermöglicht trotz seiner Handlichkeit Biegungen mit Biegeradien von 1,25 bis 3,5 x D ohne Einknickungen, da eine besonders sichere Lagefixierung des Rohres während des Biegevorgangs durch fest an ein zu biegendes Rohr anlegbare Klemmbacken, die eine flächige, vor dem Biegebereich gelegene Einspannung bewirken, eine dosierte Krafteinleitung auf das Rohr durch die Biegerolle ermöglicht. Über eine Variation der Hebellängen ist die Umformkraft an unterschiedliche Rohre anpaßbar.

In der nachfolgenden Beschreibung und in den Zeichnungen werden Ausführungsbeispiele der Erfindung näher veranschaulicht. In der Zeichnung zeigen:
- Fig. 1: eine Prinzipdarstellung einer erfindungsgemäßen Vorrichtung mit einem zu biegenden Rohr in Ausgangsstellung der Teile,
- Fig. 2: die Teile der Vorrichtung gemäß Fig. 1 mitsamt Rohr bei einem Biegewinkel von 90°,
- Fig. 3: die Teile der Vorrichtung gemäß Fig. 1 mitsamt Rohr bei einem Biegewinkel von 135°,
- Fig. 4: die Teile der Vorrichtung gemäß Fig. 1 mitsamt Rohr bei einem Biegewinkel von 180°,
- Fig. 5: eine Prinzipdarstellung der Vorrichtung gemäß Fig. 1 in Seitenansicht ohne Handhebel und ohne Spannbügel,
- Fig. 6: eine Prinzipdarstellung einer unteren Klemmbacke in einer Seitenansicht,
- Fig. 7: die Klemmbacke gemäß Fig. 6 in einer Draufsicht,
- Fig. 8: eine Prinzipdarstellung einer oberen Klemmbacke in einer Seitenansicht, und
- Fig. 9: die Klemmbacke gemäß Fig. 8 in einer Draufsicht.

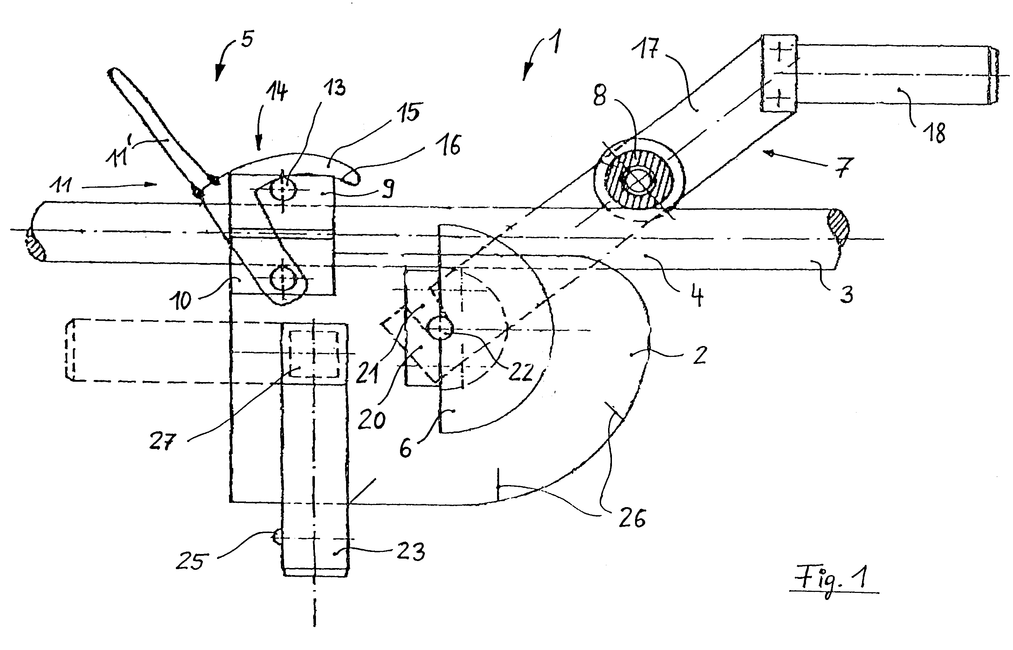

In Fig. 1 ist eine als Ganzes mit 1 bezeichnete Vorrichtung zum Biegen von Rohren in einer Ausbildung als Handarbeitsgerät dargestellt, die eine Grundplatte 2 aufweist, an der zur Festlegung eines Rohres 3 nahe dem Biegebereich 4 eine Spannvorrichtung 5 lösbar befestigt ist. Das Rohr 3 ist dabei soweit in den Bereich einer ebenfalls lösbar an der Grundplatte 2 befestigten Biegeschablone 6 vorgeschoben, daß eine an einem Schwenkhebel 7 auswechselbar gehaltene Biegerolle 8 auf dem Rohr 3 aufliegt.

In dieser Biegeausgangsstellung gemäß Fig. 1 wird das Rohr 3 in der Spannvorrichtung 5 von Klemmbacken 9,10 (Fig. 5 bis 9) aufgenommen und mit einem Spannbügel 11 verschiebesicher festgelegt, wobei die Klemmbacken 9,10 einen flächigen Eingriff schaffen.

Die Spannvorrichtung 5 hat zweckmäßig eine obere schwenkbewegliche Klemmbacke 9 und eine untere ortsfeste Klemmbacke 10, die zur Anpassung an unterschiedliche Durchmesser des Rohres 3 auswechselbar sind. Die schwenkbewegliche Verbindung der Klemmbacken 9,10 ist dabei zweckmäßig über ein Scharnier 12 hergestellt (Fig. 5).

Die Spannvorrichtung 5 weist auf ihrer dem Scharnier 12 abgewandten Seite (Fig. 5) einen stiftförmigen Spannansatz 13 auf, auf den ein Spannglied 14 des Spannbügels 11 aufschiebbar ist. Das Spannglied 14 ist dabei von einem bogenförmigen Vorsprung 15 gebildet, der einstückig mit einem Teil des Spannbügels 11 bildenden Spannhebel 11' verbunden ist. Damit vermittelt der Spannhebel 11' mit zunehmendem Schwenkwinkel der oberen Klemmbacke 9 eine zunehmende Spannkraft, da der Vorsprung 15 im Anlagebereich zum Spannansatz 13 mit einer Schließkurve 16 ausgebildet ist.

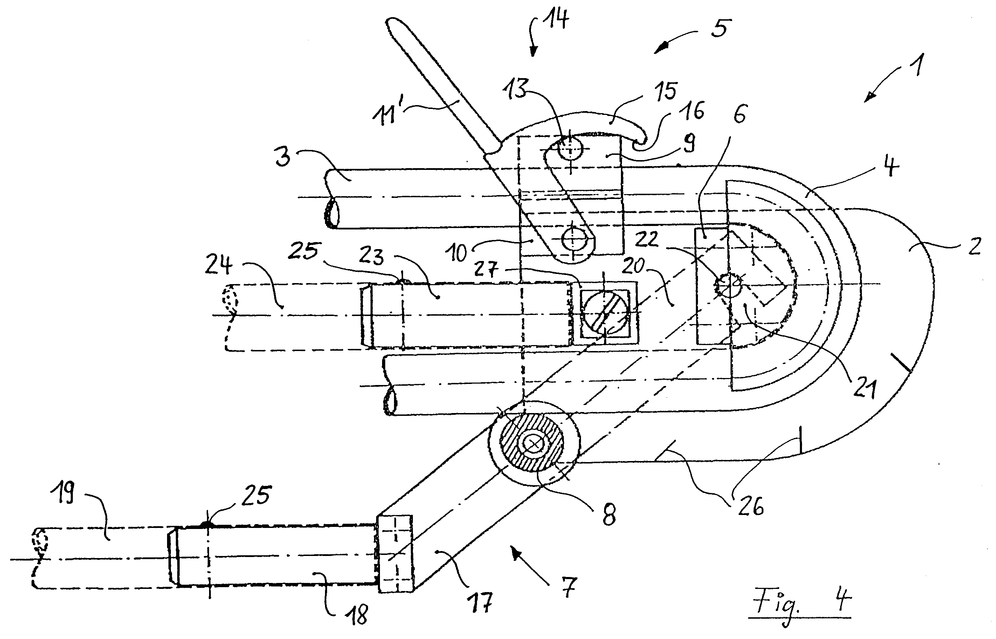

Die in Fig. 1 in Ausgangsstellung befindliche Biegerolle 8 ist drehbeweglich und zweckmäßig austauschbar an einem als Biegegabel 17 ausgebildeten Schwenkhebel 7 abgestützt, und auf den Schwenkhebel 7 ist im Bereich eines abgewinkelten Ansatzes 18 eine Hebelverlängerung 19 (Fig. 4) aufsteckbar.

Die Biegegabel 17 weist im Endbereich ihrer Schenkel 20 Aufnahmeschlitze 21 auf, mit denen die Biegegabel 17 auf an der Grundplatte 2 befestigte Schwenkbolzen 22 aufsetzbar ist, die die Biegegabel 17 in Form eines Widerlagers schwenkbeweglich abstützen.

An der Grundplatte 2 ist als Gegenhalter ein in seiner Ausrichtung zur Grundplatte 2 verstellbarer Hebelteil 23 angeordnet, auf den ebenfalls eine Hebelverlängerung 24 aufsteckbar und mit einem Rastknopf 25 auswechselbar gehalten ist.

Die Biegeschablone 6 ist in vorteilhafter Ausführung als auswechselbares Vorrichtungsteil ausgebildet, so daß mit der Vorrichtung 1 verschiedene Außendurchmesser aufweisende Kunststoff- oder Verbundrohre 3 gebogen werden können, wobei der Biegeradius der Biegeschablone 6 das 1,25- bis 3,5-fache des Rohrdurchmessers betragen kann.

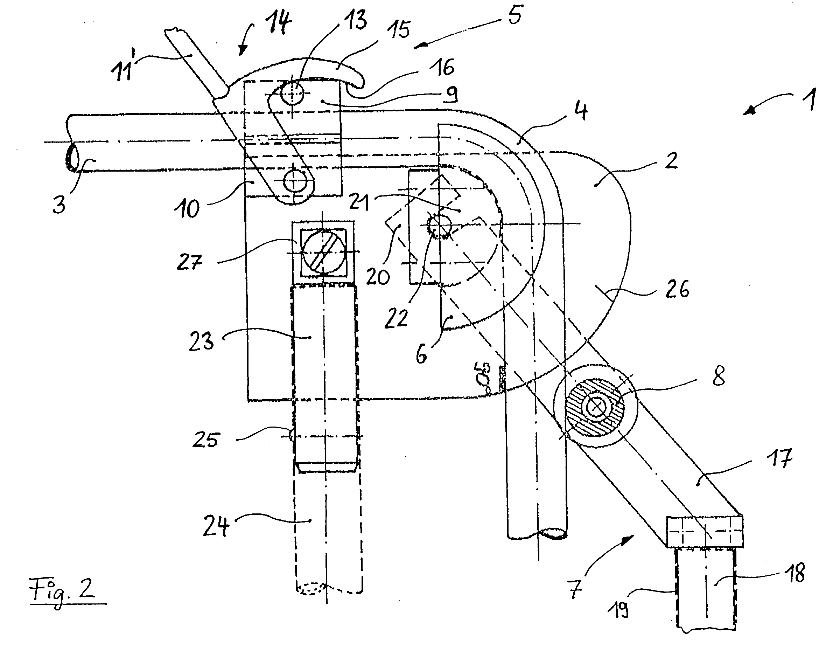

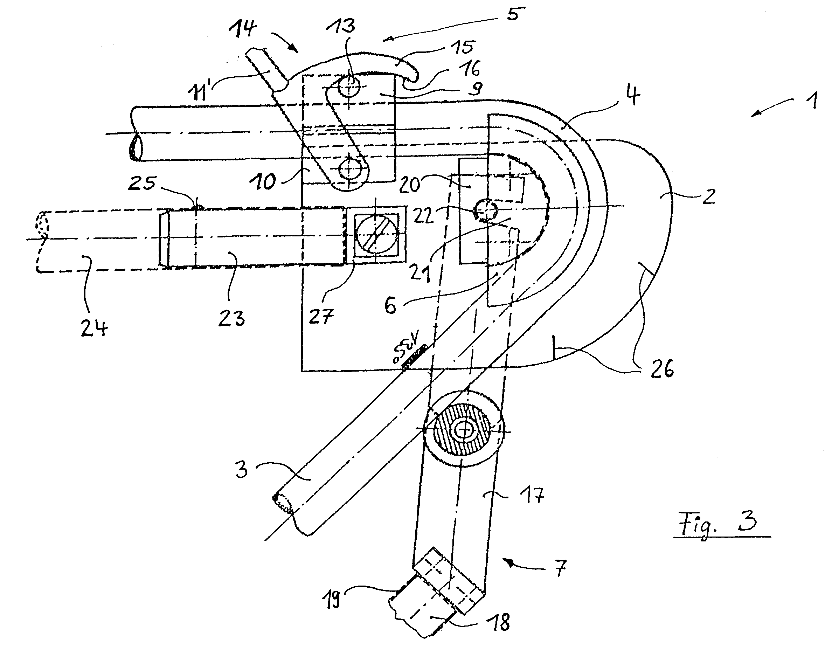

In Fig. 2 bis 4 sind verschiedene Biegestadien des Rohres 3 dargestellt, wobei der Schwenkhebel 7 mit seiner Biegerolle 8 das Rohr 3 soweit um die Biegeschablone 6 herum verschwenkt, bis der jeweils beabsichtigte Biegewinkel erreicht ist. Der erreichte Biegewinkel kann über eine entsprechende Markierung 26 auf der Grundplatte 2 abgelesen werden. Der Handhebel 23,24 wird für diesen manuellen Biegevorgang mit seinem Haltebereich 27 jeweils in die als Gegenhalter zweckmäßige Position verstellt.

In der Seitenansicht gemäß Fig. 5 wird deutlich, daß für die Festlegung des unverformten Rohres 3 in den Klemmbacken 9,10 entsprechende Profilausnehmungen 28,29 vorgesehen sind, deren Radius in der dargestellten Ausführungsform mit dem Halbkreisprofil 30 in der Biegeschablone 6 übereinstimmt, so daß der zu biegende Bereich des Rohres 3 flächig in dem Halbkreisprofil 30 beim Biegevorgang abgestützt ist.

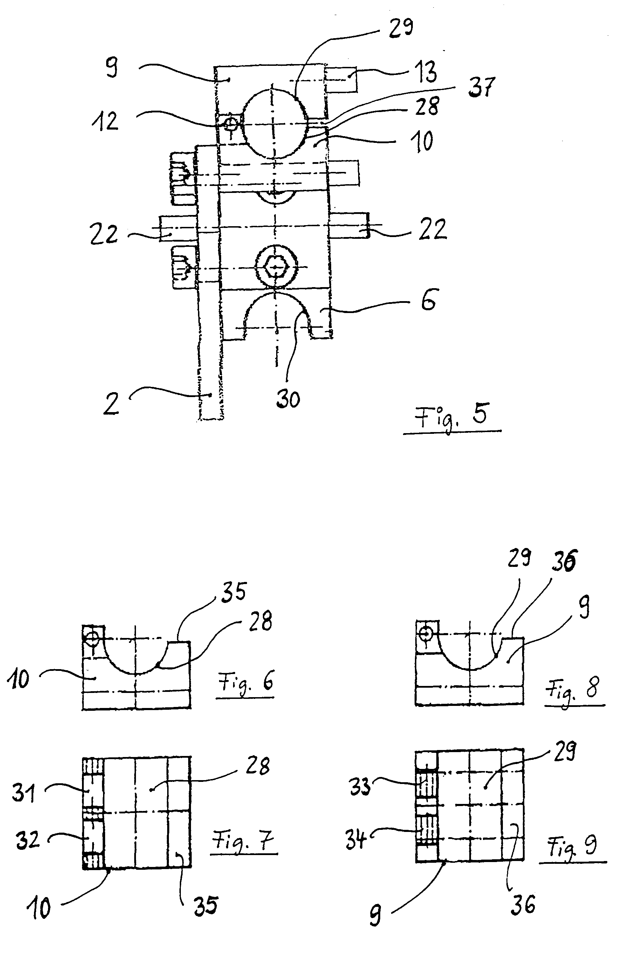

In Fig. 6 und 7 ist die untere Klemmbacke 10 in Einzeldarstellung veranschaulicht, wobei die das Scharnier 12 bildenden Formausnehmungen 31,32 und entsprechende Gegenformen 33,34 an der oberen Klemmbacke 9 (Fig. 8,9) wechselseitig vertauscht angeordnet sein können. Die Höhe der Klemmbacken 9,10 ist im Bereich der beiden Trennflächen 35,36 so ausgebildet, daß stets ein Klemmspalt 37 (Fig. 5) verbleibt.

In weiterer Ausgestaltung können die Vorrichtungsteile 5,6,7,8 aus leichtem Metall oder auch aus Kunststoff gefertigt sein und beim Biegen kann in das Rohr 3 eine Biegefeder eingeschoben werden.

## Patentansprüche

1. Vorrichtung zum Biegen von Rohren, insbesondere Kunststoff- oder Verbundrohren, mit einer Grundplatte, einer an den Rohrquerschnitt im Profil angepaßten Biegeschablone (6), einer Spannvorrichtung (5) für die Rohrfestlegung nahe dem Biegebereich (4) der Biegeschablone (6) und mit einer Biegerolle (8), die ein an den Rohrquerschnitt angepaßtes Profil aufweist und an einem als Handhebel ausgebildeten Schwenkhebel (7) abgestützt ist, der bei einer Schwenkbewegung die Biegerolle (8) auf einem Teilkreis um die Biegeschablone (6) bewegt, der zu deren Formfläche konzentrisch verläuft,
**dadurch gekennzeichnet,** daß die Vorrichtung mit einem Handhebel (23,24) als Gegenhalter versehen ist, die Spannvorrichtung (5) eine untere orstfeste Klemmbacke (10) und eine obere, durch ein Scharnier (12) schwenkbewegliche Klemmbacke (9) umfaßt, die auf ihrer dem Scharnier (12) abgewandten Seite mit einem Spannansatz (13) versehen ist, auf den ein an einem Spannhebel (11') angeordnetes Spannglied (14) bei Verschwenken des Spannhebels (11') aufschiebbar ist, das eine Schließkurve (16) aufweist, welche eine mit fortschreitendem Aufschieben zunehmend Spannkraft vermittelt, und daß der Schwenkhebel (7) von einer Biegegabel (17) mit aufsteckbarer erster Hebelverlängerung (19) gebildet ist, wobei die schwenkbar an der Grundplatte (2) gelagerten Schenkel (20) der Biegegabel (17) auf Schwenkbolzen (22) an der Grundplatte (2) aufsetzbar sind und zur Aufnahme der Schwenkbolzen (22) Aufnahmeschlitze (21) aufweisen.

2. Vorrichtung nach Anspruch 1, dadurch gekennzeichnet, daß der Handhebel einen verstellbar mit der Grundplatte (2) verbundenen Hebelteil (23) aufweist, auf dem eine zweite Hebelverlängerung (24) aufsteckbar ist.

3. Vorrichtung nach Anspruch 1 oder 2, dadurch gekennzeichnet, daß der Biegeradius der Biegeschablone (6) das 1,25- bis 3,5-fache des Rohrdurchmessers beträgt.

4. Vorrichtung nach einem der Ansprüche 1 bis 3, dadurch gekennzeichnet, daß die Biegerolle (8) lösbar mit dem Schwenkhebel (7) verbunden ist.

## Claims

1. A device for the bending of tubes, particularly of plastics tubes and composite-material tubes, comprising a base plate, a bending template (6) having its profile adapted to the cross section of the tube, a clamping means (5) for fixing the tube near the bending region (4) of said bending template (6), and a bending roll (8) having a profile adapted to the cross section of the tube and being supported on a hand-lever-shaped pivot arm (7) which during a pivoting movement moves said bending roll (8) around said bending template (6) along a graduated circle extending concentrically to the forming face of said bending template (6),
**characterized in**
that the device is provided with a hand lever (23,24) as a back rest, said clamping means (5) comprises a lower, stationary clamping jaw (10) and an upper clamping jaw (9) which is pivotable via a hinge (12) and on its side facing away from said hinge (12) is provided with a clamping projection (13) provided for abutment by a clamping member (14), arranged on a clamping lever (11'), upon pivoting movement of said clamping lever (11'), said clamping member (14) presenting a curved closing surface (16) provided to exert a clamping force increasing with said abutting movement, and that said pivot arm (7) is formed by a bending fork (17) with a mountable first lever extension (19), wherein the legs (20) of said bending fork (17), pivot-ably supported on said base plate (2), are adapted to be mounted to pivot pins (22) of said base plate (2) and comprise receiving slots (21) for receiving said pivot pins (22).

2. The device according to claim 1, characterized in that said hand lever comprises a lever portion (23) connected to said base plate (2) in an adjustable manner and adapted to have a second lever extension (24) mounted thereon.

3. The device according to claim 1 or 2, characterized in that the bending radius of said bending template (6) is 1.25 to 3.5 times the tube diameter.

4. The device according to any one of claim 1 to 3, characterized in that said bending roll (8) is detachably connected to said said pivot arm (7).

## Revendications

1. Dispositif de cintrage de tubes, en particulier de tubes en matière plastique ou de tubes composites, comportant une plaque de base, un gabarit de cintrage (6) adapté en profil à la section transversale de tube, un dispositif de serrage (5) pour la fixation du tube au voisinage de la zone de cintrage (4) du gabarit de cintrage (6) et comportant un galet de cintrage (8) qui présente un profil adapté à la section transversale de tube et qui est supporté par un levier pivotant (7) réalisé en tant que levier à main, lequel levier lors d'un mouvement de pivotement déplace le galet de cintrage (8) suivant un arc de cercle autour du gabarit de cintrage (6), arc de cercle qui est concentrique à la surface de formage de celui-ci,
caractérisé par le fait que le dispositif est muni d'un levier à main (23, 24) en tant que bras de maintien, que le dispositif de serrage (5) comprend une mâchoire de serrage (10) inférieure fixe et une mâchoire de serrage (9) supérieure pivotante grâce à une charnière (12), laquelle mâchoire supérieure est munie sur son côté éloigné de la charnière (12) d'une saillie de serrage (13), sur laquelle un élément de serrage (14) disposé sur un levier de serrage (11') peut glisser en exerçant une poussée lors du basculement du levier de serrage (11'), cet élément de serrage présentant une courbe de serrage (16) qui procure une force de serrage augmentant avec la progression du coulissement, et par le fait que le levier pivotant (7) est constitué d'une fourchette de cintrage (17) avec une première rallonge de levier (19) qui peut y être montée, les branches (20) de la fourchette de cintrage (17) montées pivotantes sur la plaque de base (2) étant mises en place sur des chevilles formant pivots (22) sur la plaque de base (2) et comportant des fentes de réception (21) pour recevoir les chevilles formant pivots (22).

2. Dispositif selon la revendication 1, caractérisé par le fait que le levier à main comporte une partie de levier (23) liée de manière réglable à la plaque de base (2), partie de levier sur laquelle peut être montée une deuxième rallonge de levier (24).

3. Dispositif selon la revendication 1 ou 2, caractérisé par le fait que le rayon de courbure du gabarit de cintrage (6) s'élève à 1,25 fois - jusqu'à 3,5 fois le diamètre du tube.

4. Dispositif selon l'une des revendications 1 à 3, caractérisé par le fait que le galet de cintrage (8) est lié de manière démontable au levier pivotant (7).
